# EUROPEAN PATENT APPLICATION

(11) **EP 4 732 980 A1**
(43) Date of publication of application: **29.04.2026**
(21) Application number: 25210494.8
(22) Date of filing: 22.10.2025
(51) Int. Cl.: B23K 9/32, B08B 15/04

(54) **FLOATING UNIVERSAL TORCH FUME CAPTURE ATTACHMENT**

(30) Priority: 23.10.2024 US 202463711019 P; 30.09.2025 US 202519345246
(71) Applicant: Illinois Tool Works Inc., Glenview IL 60025 (US)
(72) Inventor: KOPAC III, Jordan, Glenview, 60025 (US); GUSE, Matthew, Glenview, 60025 (US); LEGG, Marshall, Glenview, 60025 (US)
(74) Representative: HGF

(57) **Abstract**

Systems and methods are provided for implementing and utilizing floating universal torch fume capture attachments. An example fume capture attachment may be configured for use in welding-type systems. The fume capture attachment may be configured for operation in conjunction with a welding-type torch while engaged by an automated torch holder. The fume capture attachment may include a torch engagement section configured to engage the welding-type torch in a floating manner, an extraction flow section configured to provide a fume extraction path from an area adjacent to at least a portion of the weld-type torch where welding is performed, and a mounting section configured to enable securely mounting the fume capture attachment onto a structure in proximity to the welding-type torch.

## Description

### CLAIM OF PRIORITY

This patent application claims priority to and claims benefit from United States Provisional Patent Application Serial No. 63/711,019, filed on October 23, 2024. The above identified application is hereby incorporated herein by reference in its entirety.

### BACKGROUND

Welding has become increasingly ubiquitous. Welding can be performed in an automated manner or in a manual manner (e.g., being performed by a human). Equipment or components used during welding operations may be driven using engines. For example, engines may be used to drive, for example, generators, power sources, etc. used during welding operations.

In some instances, conventional welding-type systems may have some limitations and/or disadvantages. For example, welding-type systems configured for automated operations (e.g., by use of robotics) may have limitations with respect to managing various parameters or functions associating with the automated welding operations.

Further limitations and disadvantages of conventional approaches will become apparent to one skilled in the art, through comparison of such approaches with some aspects of the present systems and methods set forth in the remainder of this disclosure with reference to the drawings.

### BRIEF SUMMARY

Aspects of the present disclosure relate to welding solutions. More specifically, various implementations in accordance with the present disclosure are directed to systems and methods for floating universal torch fume capture attachment, substantially as illustrated by or described in connection with at least one of the figures, and as set forth more completely in the claims.

These and other advantages, aspects and novel features of the present disclosure, as well as details of an illustrated implementation thereof, will be more fully understood from the following description and drawings.

### BRIEF DESCRIPTION OF THE DRAWINGS

Fig. 1 shows an example welding-type setup.
Fig. 2 shows an example automated welding-type setup.
Figs. 3A-3B illustrate an example fume capture attachment.
Fig. 4 illustrates an example fume capture attachment.

### DETAILED DESCRIPTION

As utilized herein, the terms "circuits" and "circuitry" refer to physical electronic components (e.g., hardware), and any software and/or firmware ("code") that may configure the hardware, be executed by the hardware, and/or otherwise be associated with the hardware. As used herein, for example, a particular processor and memory (e.g., a volatile or non-volatile memory device, a general computer-readable medium, etc.) may comprise a first "circuit" when executing a first one or more lines of code and may comprise a second "circuit" when executing a second one or more lines of code. Additionally, a circuit may comprise analog and/or digital circuitry. Such circuitry may operate, for example, on analog and/or digital signals. It should be understood that a circuit may be in a single device or chip, on a single motherboard, in a single chassis, in a plurality of enclosures at a single geographical location, in a plurality of enclosures distributed over a plurality of geographical locations, etc. Similarly, the term "module" may, for example, refer to a physical electronic components (e.g., hardware) and any software and/or firmware ("code") that may configure the hardware, be executed by the hardware, and/or otherwise be associated with the hardware.

As utilized herein, circuitry or module is "operable" to perform a function whenever the circuitry or module comprises the necessary hardware and code (if any is necessary) to perform the function, regardless of whether performance of the function is disabled or not (e.g., by a user-configurable setting, factory trim, etc.).

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y, and z." As utilized herein, the term "exemplary" means serving as a non-limiting example, instance, or illustration. As utilized herein, the terms "for example" and "e.g." set off lists of one or more non-limiting examples, instances, or illustrations.

Welding-type power, as used herein, refers to power suitable for welding, plasma cutting, induction heating, CAC-A (carbon arc cutting/air) and/or hot wire welding/preheating (including laser welding and laser cladding). Welding-type power supply, as used herein, refers to a power supply that can provide welding-type power. A welding-type power supply may include power generation components (e.g., engines, generators, etc.) and/or power conversion circuitry to convert primary power (e.g., engine-driven power generation, mains power, etc.) to welding-type power.

Welding-type operations, as used herein, comprise operations in accordance with any known welding technique, including flame welding techniques such as oxy-fuel welding, electric welding techniques such as shielded metal arc welding (e.g., stick welding), metal inert gas welding (MIG), tungsten inert gas welding (TIG), resistance welding, as well as gouging (e.g., carbon arc gouging), cutting (e.g., plasma cutting), brazing, induction heating, soldering, and/or the like.

Welding-type setup, as used herein, refers to any setup comprising welding related devices or equipment (e.g., welding power sources, welding torch, welding gear such as headwear and the like, auxiliary devices or systems, etc.) which are used in facilitating and/or in conjunction with welding-type operations.

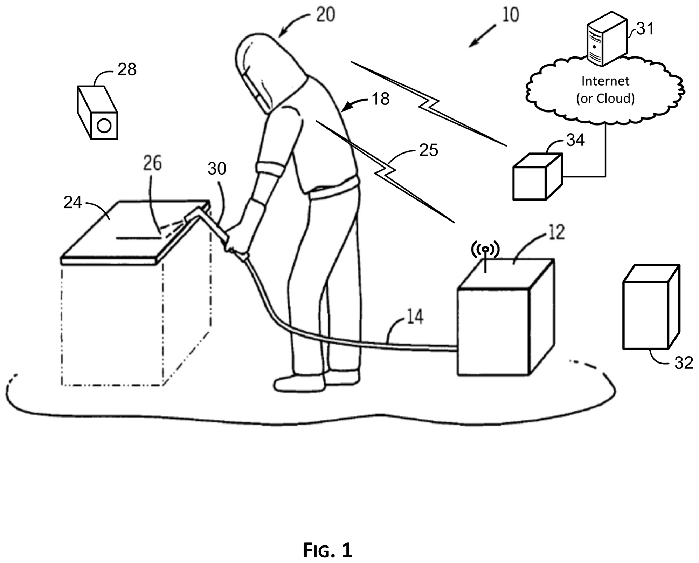

Fig. 1 shows an example welding-type setup. Referring to Fig. 1, there is shown an example welding-type setup 10 in which an operator (user) 18 is wearing welding headwear 20 and welding a workpiece 24 using a torch 30 to which power is delivered by equipment 12 via a conduit 14, with weld monitoring equipment 28, which may be available for use in monitoring welding operations.

The equipment 12 may comprise a power source, optionally a source of a shield gas and, where wire/filler material is to be provided automatically, a wire feeder. Further, in some instances an engine 32 may be used to drive equipment or components used during welding operations. The engine 32 may comprise a gas engine or a liquefied petroleum (LP) engine. The engine 32 may drive generators, power sources, etc. used during welding operations.

The welding-type setup 10 of Fig. 1 may be configured to form a weld joint by any known welding-type technique. For example, optionally in any implementation, the welding equipment 12 may be arc welding equipment that provides a direct current (DC) or alternating current (AC) to a consumable or non-consumable electrode of a torch 30. The electrode delivers the current to the point of welding on the workpiece 24. In the welding-type setup 10, the operator 18 controls the location and operation of the electrode by manipulating the torch 30 and triggering the starting and stopping of the current flow. In other implementations, a robot or automated fixture may control the position of the electrode and/or may send operating parameters or trigger commands to the welding system. When current is flowing, an arc 26 is developed between the electrode and the workpiece 24. The conduit 14 and the electrode thus deliver current and voltage sufficient to create the electric arc 26 between the electrode and the workpiece. The arc 26 locally melts the workpiece 24 and welding wire or rod supplied to the weld joint (the electrode in the case of a consumable electrode or a separate wire or rod in the case of a non-consumable electrode) at the point of welding between electrode and the workpiece 24, thereby forming a weld joint when the metal cools.

Optionally in any implementation, the weld monitoring equipment 28 may be used to monitor welding operations. The weld monitoring equipment 28 may be used to monitor various aspects of welding operations, particularly in real-time (that is as welding is taking place). For example, the weld monitoring equipment 28 may be operable to monitor arc characteristics such as length, current, voltage, frequency, variation, and instability. Data obtained from the weld monitoring may be used (e.g., by the operator 18 and/or by an automated quality control system) to ensure proper welding.

As shown, the equipment 12 and headwear 20 may communicate via a link 25 via which the headwear 20 may control settings of the equipment 12 and/or the equipment 12 may provide information about its settings to the headwear 20. Although a wireless link is shown, the link may be wireless, wired, or optical.

Optionally in any implementation, equipment or components used during welding operations may be driven using engines. For example, the engine 32 may drive generators, power sources, etc. used during welding operations. In some instances, it may be desired to obtain information relating to used engines. For example, data relating to engines (and operations thereof) used during welding operations may be collected and used (e.g., based on analysis thereof) in monitoring and optimizing operations of these engines. The collection and use of such data may be performed telematically-that is, the data may be collected locally, subjected to at least some processing locally (e.g., formatting, etc.), and then may be communicated to remote management entities (e.g., centralized management locations, engine providers, etc.), using wireless technologies (e.g., cellular, satellite, etc.).

Optionally in any implementation, a dedicated controller (e.g., shown as element 34 in Fig. 1) may be used to control, centralize, and/or optimize data handling operations. The controller 34 may comprise suitable circuitry, hardware, software, or any combination thereof for use in performing various aspects of the engine related data handling operations. For example, the controller 34 may be operable to interface with the engine 32 to obtain data related thereto. The controller 34 may track or obtain welding related data (e.g., from weld monitoring equipment 28, from equipment 12, etc.). The controller 34 may then transmit the data (e.g., both engine related and weld related data), such as to facilitate remote monitoring and/or management, by way of wireless communications. This may be done using cellular and/or satellite telematics hardware, for example.

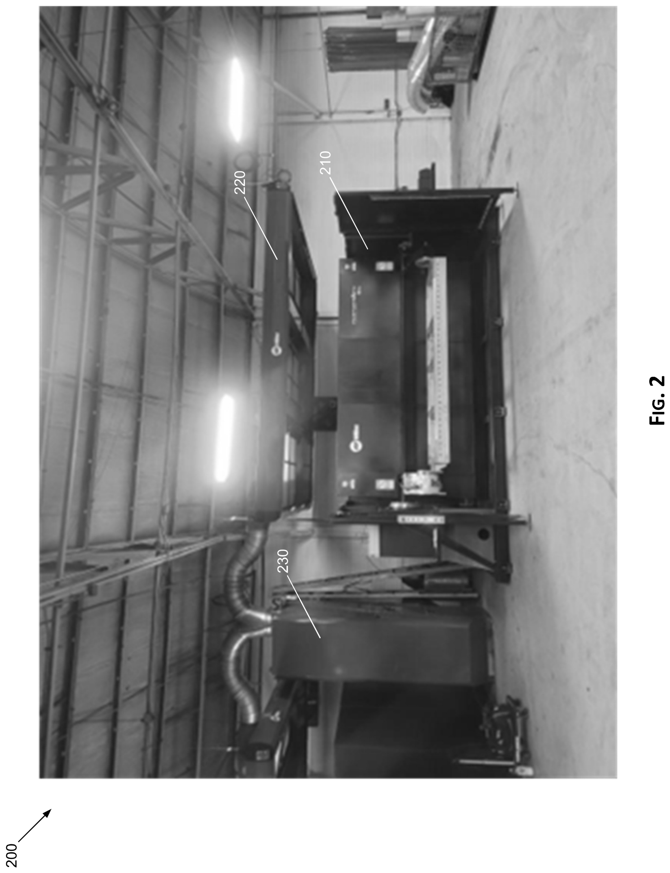

In some instances, it may be desirable to adjust certain aspects of various existing functions in welding-type setups, such as the welding-type setup 10 of Fig. 1, and/or to incorporate new functions thereto, such as to enhance and/or optimize performance when using or operating such welding-type setups. For example, in some instances, welding-type setups may be configured for automated operations, where at least certain aspects or functions associated with the welding operations (e.g., applying of welds) are automated (e.g., robotically). An example welding-type setup configured for automated operations is illustrated and described with respect to Fig. 2.

However, automated operations may have some limitations and/or may pose some challenges. For example, there may be some limitations and/or challenges with respect to handling of fumes that are generated or are otherwise caused when applying welds during automated operations. As such, solutions directed to facilitating fume capture and extraction may be needed to enhance and/or optimize automated operations. In particular, fume capture and extraction methods and technologies may need to be developed in order to keep up with the growing demand and popularity of automated (e.g., robotic) welding. In this regard, with such robotic welding, there may more significant welding, done at a significantly faster rate, when compared to typical "manual" welding. This means, for example, that there is a linear relationship between that, and the increase of fume generation of a factory.

Solutions in accordance with the present disclosure address and/or overcome at least some of the issues and/or challenges associated with automated welding, such as by providing improved mechanisms for fume capture and extraction. Example embodiments based on such solutions, and details related thereto, are described in more detail below.

Fig. 2 shows an example automated welding-type setup. Shown in Fig. 2 is a welding-type setup 200 (or portion thereof).

The welding-type setup 200 may be substantially similar to the welding-type setup 10 of Fig. 1, and as such may comprise many of the same components, devices, and/or subsystems described with respect to the welding-type setup 10. However, the welding-type setup 200 may be configured as an automated welding-type setup.

In this regard, as noted above, in some instances, welding-type setups may be configured for automated operations, where at least some aspects or functions associated with the welding operations are automated (e.g., robotically). For example, in such automated operations, the welding may be done, at least partially, in automated manner (e.g., robotically). Such automated welding may be achieved by use of, for example, automated torch holders, which may be programmed to engage (e.g., securely hold) and operate the torches, without requiring direct user interaction with (e.g., holding and/or moving of) the torch. Example automated torch holders may comprise robotic arms or the like. Use of such automated welding has been steadily increasing, with more than 20% of commercial welding in the United States by some estimates being performed by robotics. This trend is expected to continue to grow with no signs of slowing down in the future.

However, as noted above, automated operations may have some limitations and/or may pose some challenges, such as with respect to fume capture and extraction. As such, solutions directed to facilitating fume capture and extraction may be needed to enhance and/or optimize automated operations.

Solutions based on conventional approaches may be very limited, particularly with respect to effectively capturing the fumes from robotic applications. For example, one approach may be use of built-in fume torch-that is where the fume capture and extraction mechanism built into the robotic torch itself. However, such approach poses challenges of its own, such as availability (because most existing robotic applications do not have this feature already built in), and the added cost and complexity of providing such built-in fume torch.

Another approach is use of fume hood. This is illustrated in Fig. 2, where the welding-type setup 200 incorporates a fume hood 220 over a robotic cell 210, in which the welding is performed. Such fume hood is typically suspended or mounted on top of a robotic cell and may be hooked up to a centralized system 230 configured to provide the extraction force (e.g., sucking of fumes). However, such approach also poses challenges of its own, such as the inability to load heavy objects into the cell with the use of cranes or tall fork trucks. As such, solutions based on this approach may be only useful in the situations where parts are being handloaded, which limits the scope of use.

Another challenge or limitation with such approach is space-namely, accommodating automated welding in tight areas. This may be particularly the case in multiple torch applications, where multiple torches (e.g., 4) are used to apply welds at the same time, which results in extreme lack of space to be able to mount a centralize system, or some sort of large external fume extraction arms. This type of situation typically leads one towards a low profile fume hood, but if the parts are large (as they are in this picture) they must be loaded with an overhead crane, thus low profile fume hoods are not possible.

Solutions in accordance with the present disclosure address and/or overcome at least some of these issues and/or challenges associated with automated welding, such as by utilizing improved mechanisms for capturing fumes generated during welding operations, preferably as close as possible to the source (e.g., where the welding is done), and for extracting (e.g., moving away) these fumes. In particular, in various implementations based on the present disclosure, fume capture attachments are used, being configured adaptively for use in conjunction with torches during automated welding, to facilitating fume capture and extraction during automated welding operations.

For example, such fume capture attachments may be configured to engage robotically operated torches (e.g., torches attached to robotic arms or holders) in a manner that allows for capturing of fumes, particularly close to the source, and extracting of the captured fumes away. Further, such fume capture attachments may be configured for engaging the torches in floating manner. In this regard, as used herein "floating" means that fume capture attachment may engage the torch without being securely attached to the torch. Rather, the fume capture attachment may not be in direct contact with any part of the torch, or alternatively, there may be some contact but the torch may still move freely. This may allow for installation and/or making adjustments to the torch without affecting the fume capture attachment, and/or may accommodate any movement by the torch during operation. Nonetheless, while the engaging is done in floating manner, the torch, the automated torch holder, and the fume capture attachment may move together, particularly relative to the workpiece to which the weld is applied.

As such, with fume capture attachments incorporating floating based design, in accordance with the present disclosure, the torch may float freely within the bounds of the fume capture attachment (e.g., without actually coming into contact with it), with the fume capture attachment being attached to a rigid support (rather than to the welding torch itself). The free floating design may allow some limited movement of the torch within the confines of the fume capture attachment. This also means that no alterations are required to the torch to mount or otherwise engage the fume capture attachment. The free floating design may also allow complete access to changing consumables, and even changing welding method, simply by changing the torch (e.g., switching out a TIG torch for a MIG gun) without the need to remove the fume capture attachment. Such free floating engagement may be particularly suitable for certain types of torches, such as TIG torches. Nonetheless, the disclosure is not limited to particular type of torches, and any type may be used as long as it may be accommodated by the attachment.

Example embodiments of such fume capture attachments are described in more detail below.

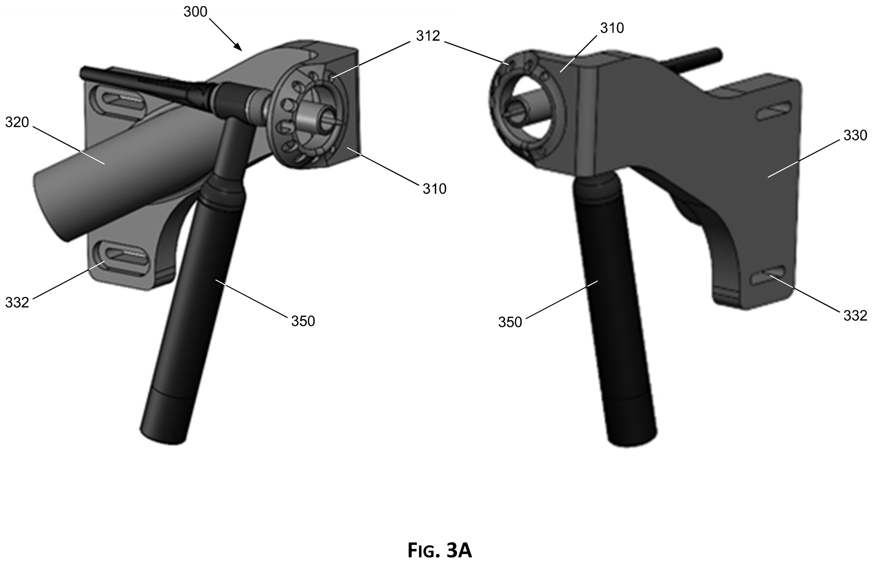

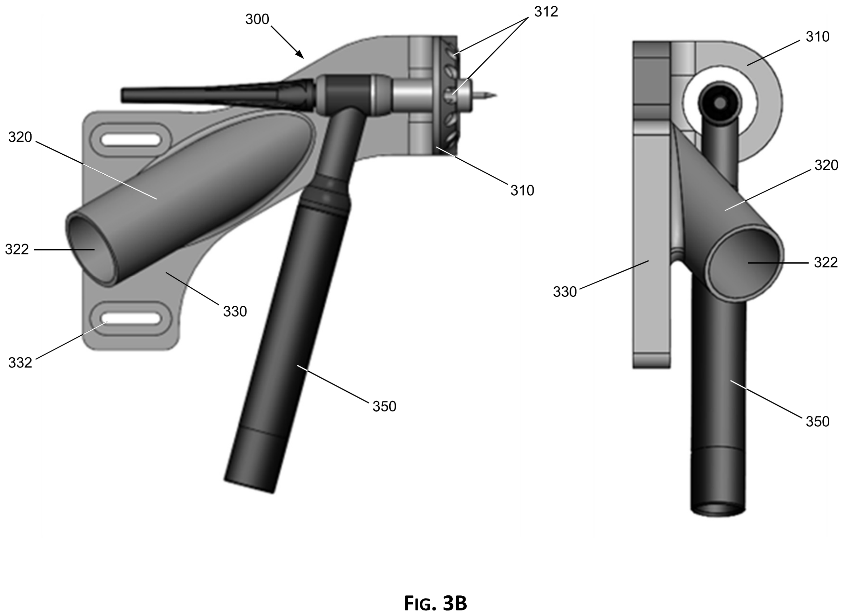

Figs. 3A-3B illustrate an example fume capture attachment. Shown in Figs. 3A-3B is a fume capture attachment 300.

The fume capture attachment 300 is configured for operation in conjunction with a welding-type torch (e.g., the welding-type torch 350 in Figs. 3A-3B) while engaged by an automated torch holder (not shown). As shown in Figs. Figs. 3A-3B, the fume capture attachment 300 comprises a torch engagement section 310, an extraction flow section 320, and a mounting section 330.

The torch engagement section 310 is configured to engage the welding-type torch 350 in a floating manner. In this regard, as used herein "floating" means that fume capture attachment 300 as a whole, and the torch engagement section 310 in particular, need not be secured to the torch. As such, the torch engagement section 310 may not be in direct contact with any part of the welding-type torch 350; alternatively, the fume capture attachment 300 maybe be configure such that there may be some contact between the torch engagement section 310 and the torch, but that the torch may still move freely. This may be done, for example, by incorporating suitable material (e.g., rubber or the like) to allow and accommodate some contact. Nonetheless, while the engaging is done in floating manner, the torch (the welding-type torch 350), the automated torch holder, and the attachment (the fume capture attachment 300) may move together relative to the workpiece to which the weld is applied.

The torch engagement section 310 is configured to engage the welding-type torch 350 at or near where welding is performed via the welding-type torch 350. As noted, the torch engagement section 310 is configured for engaging the torch in floating manner-that is, without needing to be secured to the torch, and preferably without making any contact therewith. For example, the torch engagement section 310 may comprise an opening or space configured to enable allowing placement of the welding-type torch 350 within or through the opening or space. The opening or space may have a circular shape (as shown in Figs. 3A-3B). Nonetheless, the disclosure is not limited to any particular shape, and any suitable shape may be used.

In some instances, one or more dimensions of the opening or space may be set to accommodate a plurality of different torches (e.g., different types of torches, different makes and/or models of same type of torch, etc.). In some implementations, at least one of the one or more dimensions may be adjustable, to enable accommodating different torches. Alternatively, different fume capture attachments, each configured to accommodate one or more different torches, may be provided.

The extraction flow section 320 is configured to provide an extraction path for fumes from an area adjacent to at least a portion (e.g., head section) of the welding-type torch 350 where welding is applied via the welding-type torch 350. In this regard, the extraction flow section 320 may comprise fume flow component that allows for flow of fumes within the extraction flow section 320.

The extraction flow section 320 may be configured for enabling engaging an extraction device configured for extracting the fumes away from the welding-type torch 350. Example extraction devices may comprise vacuum machines or the like. Nonetheless, the disclosure is not limited to particular types of devices, and any suitable device or machine that may facilitate the extracting of fumes via the extraction flow section 320 may be used. Where such extraction device is used, the extraction flow section 320 may be configured for directly engaging the extraction device. For example, the extraction flow section 320 may have an extraction outlet 322 that is configured (e.g., size and/or shape thereof) to engage the extraction device. Attentively or additionally, an adapter may be used to engage the extraction device, with the extraction flow section 320 being configured for engaging the adapter.

The extraction flow section 320 (and/or the fume flow component) may be of any suitable design that allows for flow of fumes, particularly from one end (e.g., area adjacent to the welding-type torch 350 and/or the torch engagement section 310) to the other end, such as when a sucking force is applied. For example, the extraction flow section 320 may comprise a pipe-like structure (as shown in Figs. 3A-3B). In some instances, the pipe-like structure may be configured based on a preselected standard size, such as to enable use in conjunction with particular extraction devices or systems. For example, the pipe-like structure may have inner diameter in the range of 1-2.5 inches, which may allow for accommodating use of industrial vacuum machines, either directly or in conjunction with use of adapter.

The fume capture attachment 300 may further comprise one or more fume inflow features 312 configured for enabling capturing of fumes from an area in proximity to where welding is applied via the welding-type torch 350. In this regard, the one or more fume inflow features 312 may be of any suitable design that allows for inflow or ingesting of fumes, such as when a sucking force is applied. For example, the one or more fume inflow features 312 may comprise holes or inlets. The one or more fume inflow features 312 may be disposed in the torch engagement section 310 (as shown in Figs. 3A-3B). The one or more fume inflow features 312 may be connected to the extraction flow section 320, and particularly to the fume flow component thereof (e.g., via tubes, pipes, or the like, which may be disposed within the body of the fume capture attachment 300).

The mounting section 330 is configured for enabling securely mounting the fume capture attachment 300 onto a structure in proximity to the welding-type torch 350. The structure may be a part of the automated torch holder or a part of a frame associated with the automated torch holder. The mounting section 330 may be configured for enabling mounting the fume capture attachment 300 onto the structure using one or more securing elements (not shown). Example securing elements may comprise bolts or screws. The mounting section 330 may comprise one or more engaging features 332 configured to enable engaging the securing elements. For example, wherein the securing elements comprise bolts or screws, the engaging features 332 may comprise a hole having dimension that accommodate the at least one bolt or screw. Alternatively, or additionally, the engaging features 332 may comprise slots (as shown in Figs. 3A-3B). Such slots may have at least one dimension that accommodate the bolts or screws used as securing elements. As such, the slots may be configured to enable adjusting a mounting position of the fume capture attachment 300.

In some instances, a flow control component (not shown) may be used. In this regard, such flow control component may be configured to allow controlling the flow of extracted fumes via the fume capture attachment 300. For example, the flow control component may comprise one or more of a gate, a valve, or an ambient inlet.

In some instances, the fume capture attachment 300 may be configured to engage and/or be otherwise used with multiple torches at the same time

In some instances, various aspects and/or characteristics of the fume capture attachment 300 may be adaptively set or adjusted to ensure that the fume capture attachment 300 may be used under particular conditions (e.g., temperatures, ultraviolet (UV) light, etc.) associated with welding operations. For example, material selected for use in the fume capture attachment 300, physical features, etc. may be selected or adjusted to ensure accommodating use under such conditions.

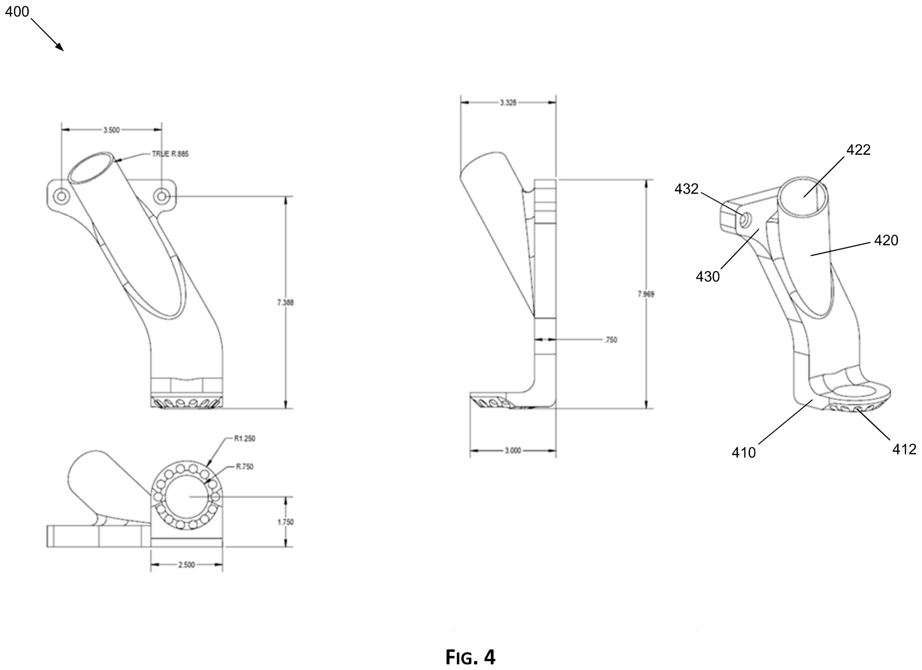

Fig. 4 illustrates an example fume capture attachment. Shown in Fig. 4 is a fume capture attachment 400. The fume capture attachment 400 is substantially similar to the fume capture attachment 300 of Figs. 3A-3B, and as such may comprise similar components and/or may operate in substantially similar manner.

For example, as illustrated in Fig. 4, the fume capture attachment 400 comprises a torch engagement section 410, an extraction flow section 420, a mounting section 430, one or more fume inflow features 412, an extraction outlet 422, and engaging features 332. Each of these components may be substantially similar to the similarly named components of the fume capture attachment 300, and may operate in a substantially similar manner. However, Illustrated in Fig. 4 is a particular implementation, with the specific dimensions that may be used for the different sections and/or components of the fume capture attachment 400 in such implementation.

An example welding-type system, based on the present disclosure, comprises a fume capture attachment configured for operation in conjunction with a welding-type torch while engaged by an automated torch holder, wherein the fume capture attachment comprises a torch engagement section configured to engage the welding-type torch in a floating manner; an extraction flow section configured to provide a fume extraction path from an area adjacent to at least a portion of the weld-type torch where welding is performed; and a mounting section configured to enable securely mounting the fume capture attachment onto a structure in proximity to the welding-type torch.

In an example embodiment, the fume capture attachment further comprises one or more fume inflow features configured for enabling capturing of fumes from an area in proximity to where the welding is performed.

In an example embodiment, the one or more fume inflow features comprise holes or inlets.

In an example embodiment, at least one of the one or more fume inflow features is disposed in the torch engagement section.

In an example embodiment, the extraction flow section comprises a pipe-like structure.

In an example embodiment, the pipe-like structure is configured based on a preselected standard size.

In an example embodiment, the extraction flow section is configured for enabling engaging an extraction device configured for extracting the fumes away from the welding-type torch.

In an example embodiment, the extraction flow section is configured for directly engaging the extraction device.

In an example embodiment, the welding-type system further comprises an adapter configured to engage an extraction device configured for extracting the fumes away from the welding-type torch.

In an example embodiment, the extraction flow section is configured for engaging the adapter.

In an example embodiment, the mounting section is configured for enabling mounting the fume capture attachment onto the structure using one or more securing elements.

In an example embodiment, the one or more securing elements comprise at least one bolt or screw, and wherein the mounting section comprises one or more engaging features configured to enable engaging the at least one bolt or screw when used in enabling mounting the fume capture attachment onto the structure.

In an example embodiment, the one or more engaging features comprise a hole having dimension that accommodate the at least one bolt or screw.

In an example embodiment, the one or more engaging features comprise a slot having at least one dimension that accommodate the at least one bolt or screw, and wherein the slot is configured to enable adjusting a mounting position of the fume capture attachment.

In an example embodiment, the torch engagement section is configured to engage the welding-type torch at or near where welding is performed via the welding-type torch.

In an example embodiment, the torch engagement section comprises an opening or space configured to enable allowing placement of the welding-type torch within or through the opening or space.

In an example embodiment, the opening or space has circular shape.

In an example embodiment, one or more dimensions of the opening or space are set to accommodate a plurality of different welding-type torches.

In an example embodiment, the welding-type system further comprises a flow control component configured to control flow of extracted fumes via the fume capture attachment.

In an example embodiment, the flow control component comprises one or more of a gate, a valve, and an ambient inlet.

In an example embodiment, the structure is a part of the automated torch holder or a part of a frame associated with the automated torch holder.

Other implementations in accordance with the present disclosure may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the processes as described herein.

Accordingly, various implementations in accordance with the present disclosure may be realized in hardware, software, or a combination of hardware and software. The present disclosure may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may be a generalpurpose computing system with a program or other code that, when being loaded and executed, controls the computing system such that it carries out the methods described herein. Another typical implementation may comprise an application specific integrated circuit or chip.

Various implementations in accordance with the present disclosure may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present disclosure has been described with reference to certain implementations, it will be understood by those skilled in the art that various changes may be made and equivalents may be substituted without departing from the scope of the present disclosure. For example, block and/or components of examples disclosed may be combined, divided, re-arranged, and/or otherwise modified. In addition, many modifications may be made to adapt a particular situation or material to the teachings of the present disclosure without departing from its scope. Therefore, it is intended that the present disclosure is not limited to the particular implementation disclosed, but that the present disclosure will include all implementations falling within the scope of the appended claims.
Certain embodiments of the invention will be described in the following clauses:
Clause 1. A welding-type system, comprising:
   a fume capture attachment configured for operation in conjunction with a welding-type torch while engaged by an automated torch holder, wherein the fume capture attachment comprises:
   a torch engagement section configured to engage the welding-type torch in a floating manner;
   an extraction flow section configured to provide a fume extraction path from an area adjacent to at least a portion of the weld-type torch where welding is performed; and
   a mounting section configured to enable securely mounting the fume capture attachment onto a structure in proximity to the welding-type torch.
Clause 2. The welding-type system according to clause 1, wherein the fume capture attachment further comprises one or more fume inflow features configured for enabling capturing of fumes from an area in proximity to where the welding is performed.
Clause 3. The welding-type system according to clause 2, wherein the one or more fume inflow features comprise holes or inlets.
Clause 4. The welding-type system according to clause 2, wherein at least one of the one or more fume inflow features is disposed in the torch engagement section.
Clause 5. The welding-type system according to clause 1, wherein the extraction flow section comprises a pipe-like structure.
Clause 6. The welding-type system according to clause 5, wherein the pipe-like structure is configured based on a preselected standard size.
Clause 7. The welding-type system according to clause 1, wherein the extraction flow section is configured for enabling engaging an extraction device configured for extracting the fumes away from the welding-type torch.
Clause 8. The welding-type system according to clause 7, wherein the extraction flow section is configured for directly engaging the extraction device.
Clause 9. The welding-type system according to clause 1, further comprising an adapter configured to engage an extraction device configured for extracting the fumes away from the welding-type torch.
Clause 10. The welding-type system according to clause 9, wherein the extraction flow section is configured for engaging the adapter.
Clause 11. The welding-type system according to clause 1, wherein the mounting section is configured for enabling mounting the fume capture attachment onto the structure using one or more securing elements.
Clause 12. The welding-type system according to clause 11, wherein the one or more securing elements comprise at least one bolt or screw, and wherein the mounting section comprises one or more engaging features configured to enable engaging the at least one bolt or screw when used in enabling mounting the fume capture attachment onto the structure.
Clause 13. The welding-type system according to clause 12, wherein the one or more engaging features comprise a hole having dimension that accommodate the at least one bolt or screw.
Clause 14. The welding-type system according to clause 12, wherein the one or more engaging features comprise a slot having at least one dimension that accommodate the at least one bolt or screw, and wherein the slot is configured to enable adjusting a mounting position of the fume capture attachment.
Clause 15. The welding-type system according to clause 1, wherein the torch engagement section is configured to engage the welding-type torch at or near where welding is performed via the welding-type torch.
Clause 16. The welding-type system according to clause 1, wherein the torch engagement section comprises an opening or space configured to enable allowing placement of the welding-type torch within or through the opening or space.
Clause 17. The welding-type system according to clause 16, wherein the opening or space has circular shape.
Clause 18. The welding-type system according to clause 16, wherein one or more dimensions of the opening or space are set to accommodate a plurality of different welding-type torches.
Clause 19. The welding-type system according to clause 1, further comprising a flow control component configured to control flow of extracted fumes via the fume capture attachment.
Clause 20. The welding-type system according to clause 19, wherein the flow control component comprises one or more of a gate, a valve, and an ambient inlet.
Clause 21. The welding-type system according to clause 1, wherein the structure is a part of the automated torch holder or a part of a frame associated with the automated torch holder.

## Claims

1. A welding-type system, comprising:
a fume capture attachment configured for operation in conjunction with a welding-type torch while engaged by an automated torch holder, wherein the fume capture attachment comprises:
a torch engagement section configured to engage the welding-type torch in a floating manner;
an extraction flow section configured to provide a fume extraction path from an area adjacent to at least a portion of the weld-type torch where welding is performed; and
a mounting section configured to enable securely mounting the fume capture attachment onto a structure in proximity to the welding-type torch.

2. The welding-type system according to claim 1, wherein the fume capture attachment further comprises one or more fume inflow features configured for enabling capturing of fumes from an area in proximity to where the welding is performed.

3. The welding-type system according to claim 2, wherein the one or more fume inflow features comprise holes or inlets.

4. The welding-type system according to claim 2 or claim 3, wherein at least one of the one or more fume inflow features is disposed in the torch engagement section.

5. The welding-type system according to any one of claims 1 to 4, wherein the extraction flow section comprises a pipe-like structure, and optionally wherein the pipe-like structure is configured based on a preselected standard size.

6. The welding-type system according to any one of claims 1 to 5, wherein the extraction flow section is configured for enabling engaging an extraction device configured for extracting the fumes away from the welding-type torch, and optionally wherein the extraction flow section is configured for directly engaging the extraction device.

7. The welding-type system according to any one of claims 1 to 6, further comprising an adapter configured to engage an extraction device configured for extracting the fumes away from the welding-type torch, and optionally wherein the extraction flow section is configured for engaging the adapter.

8. The welding-type system according to any one of claims 1 to 7, wherein the mounting section is configured for enabling mounting the fume capture attachment onto the structure using one or more securing elements.

9. The welding-type system according to claim 8, wherein the one or more securing elements comprise at least one bolt or screw, and wherein the mounting section comprises one or more engaging features configured to enable engaging the at least one bolt or screw when used in enabling mounting the fume capture attachment onto the structure.

10. The welding-type system according to claim 9, wherein the one or more engaging features comprise a hole having dimension that accommodate the at least one bolt or screw, or wherein the one or more engaging features comprise a slot having at least one dimension that accommodate the at least one bolt or screw, and wherein the slot is configured to enable adjusting a mounting position of the fume capture attachment.

11. The welding-type system according to any one of claims 1 to 10, wherein the torch engagement section is configured to engage the welding-type torch at or near where welding is performed via the welding-type torch.

12. The welding-type system according to any one of claims 1 to 11, wherein the torch engagement section comprises an opening or space configured to enable allowing placement of the welding-type torch within or through the opening or space.

13. The welding-type system according to claim 12, wherein the opening or space has circular shape, or wherein one or more dimensions of the opening or space are set to accommodate a plurality of different welding-type torches.

14. The welding-type system according to any one of claims 1 to 13, further comprising a flow control component configured to control flow of extracted fumes via the fume capture attachment, and optionally wherein the flow control component comprises one or more of a gate, a valve, and an ambient inlet.

15. The welding-type system according to any one of claims 1 to 14, wherein the structure is a part of the automated torch holder or a part of a frame associated with the automated torch holder.
